# EUROPEAN PATENT SPECIFICATION

(11) **EP 2 180 010 B1**
(45) Date of publication and mention of the grant of the patent: **30.03.2011**
(21) Application number: 09173585.2
(22) Date of filing: 21.10.2009
(51) Int. Cl.: C08F 2/44, C08F 2/24, B29D 11/00, G02B 1/10

(54) **System and method for improving adhesion and abrasion resistance using a front side transfer process to manufacture multi-coated photochromic optical lenses**
System und Verfahren zur Verbesserung der Haftung und der Verschleißfestigkeit mithilfe eines Vorderseitenübertragungsverfahrens zur Herstellung von mehrfach beschichteten, photochromen optischen Linsen
Système et procédé pour améliorer l'adhésion et la résistance à l'abrasion à l'aide d'un procédé de transfert frontal pour la fabrication de lentilles de contact photochromiques multicouches

(30) Priority: 21.10.2008 US 255317
(43) Date of publication of application: 28.04.2010
(73) Proprietor: ESSILOR INTERNATIONAL (Compagnie Générale d'Optique), 94220 Charenton le Pont (FR)
(72) Inventor: Mosse, Herbert, LUTZ, FL 33548 (US); Borgharkar, Narendra, SEMINOLE, FL 33777 (US)
(74) Representative: Santarelli

(56) References cited:
- US-A1- 2007 034 322
- US-B2- 6 770 710

## Description

### BACKGROUND

**1. Technical Field**

The present invention relates generally to optical lenses, and in particular, to a photochromic ophthalmic lens and process for producing the same.

**2. Description of Related Art**

Front Side Transfer (FST) is a well known process, the details of which are described in U.S. Patent Application Publication No. 2007/0034322. The FST process involves the transfer of a multiple-coated stack of coating layers deposited onto a carrier, from the carrier onto the front side of a lens. A thin carrier, usually a polycarbonate carrier having a curvature adapted to the curvature of the lens which will be coated, is coated by spin coating using different coatings, each having a specific function. For example, typically, the carrier is:
- first coated by a Protective Release Layer (PRC) which is able to release easily the multiple-coated stack from the carrier to the lens;
- second, coated by a Hard-coated layer which provide abrasion-resistance properties (Acrylate coating for example); and
- third, coated by a latex layer which provide impact resistance properties (PU (polyurethane latex).

Each layer is deposited by a spin process and is able to be cured by thermal polymerization or photopolymerization. This carrier comprising the multiple-coated stack is then transferred to the lens by the establishment of a contact between the last deposited layer onto the carrier and the front side of the lens through a glue layer deposited either on the front side of the lens or the said last deposited layer, and using a FST device as described in the above-mentioned patent application.

This process is also able to transfer other functional layers to the lens like anti-reflective coatings, anti-smudge coatings, photochromic layers, etc.

Polyphasic photochromic latex layers as described in U.S. Patent No. 6,770,710 are very efficient at imparting photochromic properties to a lens using the FST process. Neverthless, the final photochromic lens obtained presents a defect in adhesion. This defect in adhesion appears on the lens between the photochromic layer and the hard-coat layer.

Furthermore, while mixtures of acrylic and urethane latexes are generally used in the paint industry, in such applications haze is not an issue. However, for applications to optical lenses, a mixture of polyurethane latex with polyphasic latex needs to have low haze.

Accordingly, an efficient and effective system and method to improve the adhesion of a photochromic lens obtained by FST process using as photocromic layer a polyphasic photochromic layer, while avoiding undesirable effects, is highly desirable.

### SUMMARY OF THE INVENTION

The present invention is directed to a system, method and process to improve adhesion between a smooth cured surface (e.g., a hard coat based to an acrylic coating for example) and a large particle size polyphasic latex layer (photochromic layer). A problem in adhesion typically exists when polyphasic latex is spin coated on a hard coat layer like an acrylic coating.

For example, the following problems were observed:

1. Poor adhesion between acrylate coating and polyphasic acrylate latex coating caused failure in dry and boiling water adhesion tests.

2. Problems may arise because of the inability of large polyphasic latex particles to penetrate acrylate coating matrix and coalesce/break down as part of the film forming process.

It is noted that techniques such as under curing the acrylate layer before spin coating the polyphasic onto the acrylate did not resolve adhesion issue. Moreover, addition of various cross-linking agents to acrylate and/or polyphasic layer did not resolve the adhesion issue. For example, use of adhesion agents commonly used in vacuum deposition (like a thin layer of 1 to 2 nanometers of Chronium) also did not improve the adhesion.

In one aspect of the present invention, a novel photochromic latex formulation is provided having improved adhesion qualities, in particular, adhesion onto a hard coat layer. Surprisingly, it was found that addition of a polyurethane latex to the polyphasic latex improved impregnation and coaslescence into the acrylate layer.

In another aspect, a novel process for optimizing adhesion between acrylate and polyphasic latex coatings is provided wherein a separate layer of polyurethane latex is formed, a drying process for achieving a certain desired moisture content of the polyurethane latex is performed, and a polyphasic latex layer is added thereon.

According to one aspect of the present invention, in a process for synthesizing a photochromic latex comprising the steps of (1) preparing a mixture comprising at least one organic monomer Z with a C=C group, at least one organic photochromic compound, at least one surfactant, water, and optionally a polymerization primer; (2) treating the mixture obtained in step (1) in order to form a miniemulsion consisting of an organic phase dispersed in the form of droplets having a diameter of 50 to 500 nm, preferably 50 to 300 nm, in an aqueous phase; (3) adding to the miniemulsion of a polymerization primer, if this latter was not introduced in step (1), or of a quantity of primer additional to that added in step (1); (4) polymerizing the reaction mixture obtained in step (3), and (5) recovering the photochromic latex, an improvement step is provided comprising (6) introducing an additional latex component selected from the group consisting of a poly(meth)acrylic latex, a polyurethane latex, and a polyester latex, and combinations thereof, wherein the additional latex component reduces the haze and increases the abrasion resistance of the recovered photochromic latex.

According to another aspect, a process for making a photochromic optical article is provided comprising the steps of:
providing an optical article having a front convex suface and a back concave surface;
providing a flexible carrier having a concave surface and a convex surface, said concave surface of the carrier bearing at least one coating;
providing an apparatus comprising a deformable part and an inflatable membane device, the deformable part and the inflatable membrane of the inflatable membrane device defining therebetween a receiving space;
positioning the carrier on the inflatable membrane, within the receiving space;
placing the optical article in front of the flexible carrier, with its convex surface facing the flexible carrier and its concave surface facing the deformable part;
inflating the membrane of the inflatable membrane device, so that the coated concave surface of the carrier matches the convex surface of the optical article;
deflating the membrane of the inflatable membrane device; and
recovering the optical article with its front convex surface coated with said at least one coating transferred from the flexible carrier, wherein said at least one coating comprises a novel photochromic latex composition as herein described (e.g., in claim 1).

According to yet another aspect, a photochromic optical article is provided having a coating comprising a novel photochromic latex composition as described herein (e.g., as in claim 1).

These and other aspects, features, and advantages of the present invention will be described or become apparent from the following detailed description of the preferred embodiments, which is to be read in connection with the accompanying drawings.

### BRIEF DESCRIPTION OF THE DRAWINGS

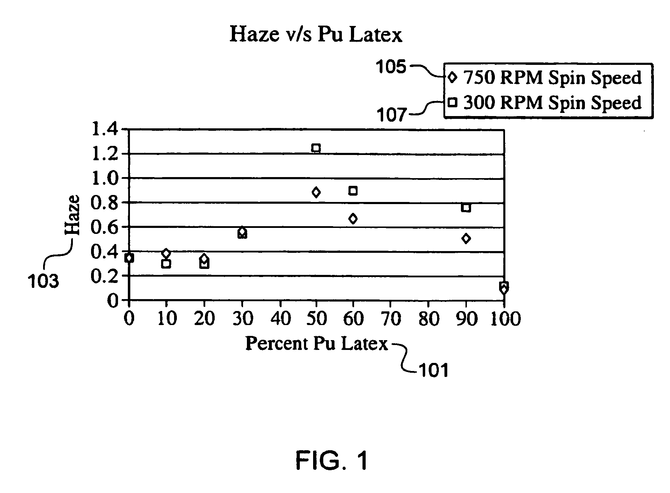

FIG. 1 is an exemplary graphical representation of Table 1, showing the amount of haze of various polyphasic latex formulations having different percentages of polyurethane latex, and applied at different spin speeds.

### DETAILED DESCRIPTION OF PREFERRED EMBODIMENTS

Exemplary coating layer arrangements may be as follows:

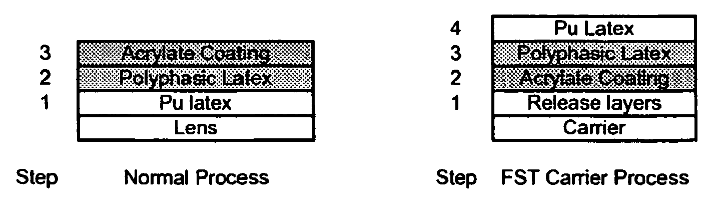

A description of exemplary coatings is provided below:

**I. Acrylate Coating:**

| **Acrylate Coating (%)** | |
|---|---|
| SR-230 | 62.15 |
| SR-399 | 10 |
| PETIA | 19.2 |
| Ciba irgacure 500 | 7.15 |
| EFKA-3034 | 1.5 |

| | |
|---|---|
| SR-230: Diethylene Glycol Diacrylate SR-399: Dipentaerythritol Pentacrylate Ester PET1A: Acrylate Ester of Pentaerythritol Ciba irgacure 500: Benzophenone, and 1-Hydroxycyclohexyl Phenyl EFKA-3034: Fluorocarbon containing a Modified Polysiloxane | |

**II. Polyphasic Photochromic Coating:**

Polyphasic latex is a core-shell latex (Essilor patent) and is described, e.g., in U.S. Patent No. 6,770,710. An exemplary polyphasic photochromic latex coating composition is as follow, (from US Patent No. 6.770.710 - Example 6):

**Polymerizable monomer**

| | | |
|---|---|---|
| Butyl methacrylate Photochromic compound | | 46.4 g |
| Spiro .A | | 3.25 g |
| | | |
| | Surfactant | |
| | DISP 3065 | 1.493 g |
| | DIP 0988 | 0.988 g |
| | Stabilization agent | |
| | Stearyl methacrylate | 2.32 g |
| | Water | 50 g |

| | | |
|---|---|---|
| DISP 3065 = DISPONIL A 3065 = fatty alcohol mixture containing 30 ethoxylated units. -Na⁺ DIP 0988 = DISPONIL FES 0988 = C₁₂₋₁₄H₂₅₋₂₉(OCH₂CH₂)₁₂OSO₃-Na⁺ (products supplied by the SIDOBRE SINNOVA company). | | |

**III. Polyurethane Latex (PU Latex):**
The Polyurethane Latex layer presents the following composition:

| PU Latex | % |
|---|---|
| Deionized water | 33.50 |
| Propylene glycol Ether | 12.00 |
| Polyurethane Latex (W234 - Baxenden) | 52.00 |
| Coupling Agent | 2.50 |

| Coupling Agent Formulation | % |
|---|---|
| GLYMO (3-Glycidyloxypropyl-trimethoxsilanc) | 33.10 |
| 3-Acryloxypropyltrimcthoxysilane | 41.80 |
| 0.1 N HCl | 19.80 |
| Diacetone alcohol | 3.80 |
| Aluminium acetylacetonate | 1.50 |

Alternate exemplary compositions of a PU latex primer coating are described in U.S. 2007/0034322, which further discloses a process (i.e., a FST procss) for making a coated optical article comprising the steps of:
- providing an optical article having a front convex suface and a back concave surface;
- providing a flexible carrier having a concave surface and a convex surface, said concave surface of the carrier bearing at least one coating;
- providing an apparatus comprising a deformable part and an inflatable membane device, the deformable part and the inflatable membrane of the inflatable membrane device defining therebetween a receiving space;
- positioning the carrier on the inflatable membrane, within the receiving space;
- placing the optical article in front of the flexible carrier, with its convex surface facing the flexible carrier and its concave surface facing the deformable part;
- inflating the membrane of the inflatable membrane device, so that the coated concave surface of the carrier matches the convex surface of the optical article;
- deflating the membrane of the inflatable membrane device; and
- recovering the optical article with its front convex surface coated with said at least one coating transferred from the flexible carrier.

The at least one coating may comprise, e.g., a photochromic coating. According to an aspect of the present invention, the at least one coating comprises a novel photochromic latex formulation having improved characteristics, such as e.g., improved adhesion with a hard coat layer, as described below.

Namely, according to one embodiment of the present invention, a novel photochromic latex formulation is provided comprising a polyurethane latex added to the polyphasic latex. Preferably, the quantity of polyurethane latex included in the photochromic latex formulation is comprised from 10 to 30%, and in a most preferred embodiment is about 20%. The polyphasic latex preferably comprises a core-shell latex (as described in U.S. 6,770,710) which presents a size of particles which are in the range of 300 nm to 450 nm.

That is, for example, in U.S. 6,770,710, a process for obtaining a photochromic polyphasic latex is described comprising:
(1) the preparation of a mixture comprising at least one organic monomer Z with a C=C group, polymerizable by a radical process, at least one organic photochromic compound, at least one surfactant, water and optionally a polymerization primer;
(2) the treatment of the mixture obtained in step (1) in order to form a miniemulsion consisting of an organic phase dispersed in the form of droplets having a diameter of 50 to 500 nm, preferably 50 to 300 nm, in an aqueous phase;
(3) the addition to the miniemulsion of a polymerization primer, if this latter was not introduced in step (1), or of a quantity of primer additional to that added in step (1);
(4) the polymerization of the reaction mixture obtained in step (3), and
(5) the recovery of the photochromic latex.

Preferably, a stabilization agent of the miniemulsion is added to the mixture in step (1). Preferably, the mixture of step (1) is obtained by preparing separately a solution A containing the monomer(s), the photochromic compounds and, optionally, the stabilization agent(s) and a solution B containing water and the surfactant(s), then by combining the two solutions A and B.

The Z monomers recommended are monomers of the alkyl (meth) acrylate type, preferably of the mono(meth) acrylate type. The alkyl groups are preferably C₁-C₁₀ alkyl groups, such as methyl, ethyl, propyl and butyl. Of the preferred monomers, the methyl, ethyl, propyl and butyl acrylates and methacrylates may be mentioned. It is also possible to use mixtures of these monomers, in particular, mixtures ofC₂-C₁₀ alkyl acrylate and C₁-C₃ alkyl methacrylate monomers.

The organic photochromic compounds comprise all organic compounds exhibiting photochromic properties. The compounds are well known in the state of the art. The preferred compounds are chromenes and spiroxazines. The photochromic compound is introduced in sufficient quantity to obtain the desired photochromic effect in the final latex films. The concentrations of photochromic compound usually vary from 1 to 10% and preferably from 2 to 7% by weight, with respect to the weight of polymerizable monomers present in the latex.

The surfactant may be ionic, non-ionic or amphoteric, or mixtures of same. Of the ionic surfactants, mention may be made of sodium dodecylsulfate, sodium dodecylbenzene sulfate, sodium sulfonate, the sulfates of sthoxylated fatty alcohols and cetyl trimethylammonium bromide (CTAB). Non-ionic surfactants may comprise ethoxylated fatty alcohols.

The stabilization agent may be an n-alkane, a halogenated n-alkane, or a polymerizable or non-polymerizable monomer, comprising a fatty chain such as a fatty alcohol or an ester of a fatty alcohol. Preferred stabilization agents may comprise hexadecane, cetyl alcohol and stearyl methacrylate. The content of stabilization agent in the mixture usually varies from 0.1 to 10%, preferably from 2 to 6%, with respect to the weight of polymerizable monomers present in the mixture.

The polymerization primer may be any primer conventionally used that may be water soluble or in the organic phase, e.g., alkali metal and ammonium persulfates, in particular sodium or potassium persulfates, hydrogen peroxide and 2,2'-azobis (2-amidino propane) dihydrochloride. It is also possible to use partially water soluble peroxides such as persuccinic acid and t-butyl hydroperoxide, or redox systems such as the persulfates combined with a ferrous ion. Mention may be made of cumyl hydroperoxide or hydrogen peroxide, in the presence of ferrous, sulfite or bisulfite ions. Primers soluble in the organic phase may be made of azobisisobutyronitrile (AIBN).

In the present invention, it is desirable that the particle size of the polyurethane latex is less than the particle size of the polyphasic latex. According to one aspect of the present invention, the polyurethane latex incorporated in the polyphasic latex typically is selected to present a particle size less than 200 nm, preferably less than 100 nm, and more preferably comprised from 20 nm to 50 nm. Significantly, these characteristics are relevant because the smaller size of the polyurethane latex particles relative to the polyphasic latex particles fills the gaps created by the larger-sized polyphasic latex particles.

Advantageously, a photochromic latex formulation according to the present invention provides better impregnation (followed by coalescence) into an acrylate layer as compared to 100% polyphasic latex. Accordingly, the novel photochromic latex formulation demonstrates improved adhesive characteristics, in particular, improved adhesion onto a hard coat layer such as an acrylate coating layer or a silane based coating layer.

Experiments presented below have been performed using, e.g., polyurethane latex, and more particularly, using PU latex W234 from Baxenden®. However, it is noted that other types of latex preferably having similar particle sizes as the polyurethane latex, e.g., a size of particles which are in the range of 20 nm to 200 nm, may be utilized. Exemplary types of latex which may alternately be used may include, e.g., (meth)acrylic latexes such as the acrylic latex commercialized under the name Acrylic Latex A-639 by Zeneca, Polyurethane latexes such as latexes commercialized under the names W-240 by Baxenden and polyester latexes.

In a second embodiment according to an aspect of the present invention, instead of adding polyurethane to a polyphasic layer, a novel process is provided wherein a separate layer of wet polyurethane latex, preferably about 2 microns thick, is formed on a lens, on top of which a polyphasic latex layer is added. According to one aspect, a controlled drying process is performed on the applied polyurethane latex layer so as to optimize and achieve a certain moisture level or "wetness" of same, thus creating a semi-dry state of the polyumthane layer, which advantageously prevents attack from the polyphasic layer. Exemplary preferred drying times/conditions to achieve the desired moisture level comprised 1 minute to 5 minutes at 60°C, and most preferably, comprised 5 minutes in an oven at 60 degrees Celsius.

Polyphasic latex is then applied to the semi-dried polyurethane. It is noted that over drying the wet polyurethane layer causes adhesion failure. Advantageously, the semi-dried polyurethane layer having the desired moisture level allows impregnation of the polyphasic layer, which improves adhesion between the polyphasic and polyurethane layers, without diluting the polyphasic layer.

Advantageously, both of the above exemplary embodiments of the present invention provided improved dry and wet adhesion between the polyphasic and polyurethane latex layers, improving dry and wet adhesion scores from 5 (total removal) to 0 (no removal). This dry and wet adhesion tests are usual in ophthalmic topics to estimate the quality of the adhesion between coatings.

Moreover, it is noted that a thicker layer of polyurethane latex may be formed to further improve adhesion. The thickness of such a layer is 0.5 µm to 5.0 µm, and preferably is 2.0 µm.

Surprisingly, addition of 20% polyurethane (PU) latex by weight to polyphasic improved adhesion with PU latex while not causing any degradation in the polyphasic, and required no change in the overall lens coating process. Furthermore, no haze has been introduced by the incorporation of PU latex into the polyphasic photochromic latex. While this method somewhat diluted the photochromic performance of the polyphasic latex, such effect was minimal. The following Table 1 shows the haze levels of eight exemplary formulas having various ratios of polyurethane latex incorporated into polyphasic latex. This experiment was a very specific experiment performed to assess the effect on haze, in which solutions of polyphasic latex (no dye) and PU latex were created in different ratios. These solutions were then spun on a convex side of a plano orma lens and cured. Coating thicknesses and haze were then noted.

**Table 1**

| | | 750 rpm | | 300 rpm | |
|---|---|---|---|---|---|
| Test # | %W234 | THK | HAZE | THK | HAZE |
| 221-201-1 | 100 | 8.71 | 0.1 | 15.15 | 0.11 |
| 221-201-2 | 90 | 8.76 | 0.51 | 14.26 | 0.76 |
| 221-201-3 | 50 | 8.26 | 0.9 | 13.74 | 1.23 |
| 221-201-4 | 60 | 8.76 | 0.67 | 16.48 | 0.89 |
| 221-201-5 | 30 | 8.87 | 0.55 | 17.19 | 0.54 |
| 221-201-6 | 20 | 8.96 | 0.34 | 14.62 | 0.3 |
| 221-201-7 | 10 | 9.44 | 0.38 | 16.91 | 0.29 |
| 221-201-8 | 0 | 11.38 | 0.35 | 23.11 | 0.35 |

| | | | | | |
|---|---|---|---|---|---|
| Test #: Number of Example %W234 : % of polyurethane latex W234 incorporated into the formulation of the polyphasic photochromic latex THK: thickness of the polyphasic photochromic latex 750 rpm/300 rpm: spin speed | | | | | |

As can be seen from Table 1, at the addition of 20% polyurethane latex, the level of haze is almost the same as that of 100% polyphasic latex (0% W234), however, as discussed above, improved adhesion is obtained. Typically, the polyphasic layer presents a thickness comprised from about 9 µm to about 20 µm. It is noted that the level of haze is independent of the thickness of the layer.

FIG. 1 is an exemplary graphical representation of Table 1, showing the amount of haze 103 of various polyphasic latex formulations having different percentages 101 of polyurethane latex, and applied at different spin speeds, e.g., at a 750 rpm spin speed 105, or at a 300 rpm spin speed 107.

Based on earlier lamination results, for the 20% PU in polyphasic latex, when rated according to the adhesion test scoring system (5-0), the dry adhesion scored at 0 (no removal) and wet adhesion scored at 0 to 1 (which are passing scores). In contrast, for 0% PU in polyphasic latex, the dry adhesion scored at 5 (total removal - this is a failing score). These results are described to the following Table 2:

**Table 2**

| | | |
|---|---|---|
| 0% PU | Dry Adhesion = 5 Fail | Wet Adhesion = 5 Fail |
| 5% PU | 5 | 5 |
| 10% PU | 1 - 5 | 5 |
| 20% PU | 0 Pass | 0 -1 Pass |

In a new experiment mixtures of PU latex W234 were made with Polyphasic latex having in-house R&D dye in different weight ratios as shown below. The mixtures were spun on uncoated Orma plano lenses and cured in oven (60 C for 15 min). The %T of the lenses were then measured before and after exposure to I cycle of a commercial UV light device by Transitions (used in Ophthalmic eyewear stores) on a Hazegard equipment. As noted below, the addition of the Pu latex to the Polyphasic did not alter the photochromic darkening property. The data are summarized to the following Table 3:

**Table 3**

| ***Addition of PU to Polyphasic*** | | | |
|---|---|---|---|
| **PU added** | **Clear %T** | **%T Dark** | **Thickness** |
| 0% | 92.9 | 82 | 3.5 |
| 5% | 92.9 | 80.9 | 3.5 |
| 10% | 92.R | 81.9 | 3.9 |
| 20% | 92.8 | 82.4 | 3.4 |
| 30% | 92.7 | 82 | 3.5 |

According to yet another advantage of the present invention, a significant improvement in abrasion performance was noted, likely due to the reversed sequence of the application of coatings on a carrier. Typically, UV coatings tend to have a lower conversion rate at the surface of the cured layer due in part to exposure to oxygen, which negatively affects the cure rate (oxygen inhibition). This suggests that the 'backside' of a UV coating (which is away from a UV source) would have a higher conversion rate, which accordingly results in greater hardness and better abrasion performance. The improved abrasion performance may be due to a gradient hardness value which increases as one proceeds from the layers nearest to the lens to the layers away from lens.

Thus, using a carrier (e.g., as in the FST process) to apply a coating stack to a lens provides that a UV coating would be able to be transferred to a lens in such a way that the layer subject to the higher conversion rate (i.e., during curing) would thereafter be exposed on the lens surface upon application. In other words, using a carrier to transfer a coating stack results in a flipped layer arrangement upon transfer to a lens, such that the layer adjacent to the carrier becomes the layer which is outermost on the lens surface. This enables the application of a more abrasion-resistant hard coating. It appears that in film that was transferred, the ISTM Bayer test score improved from 2.3 to 4.5 (approximately 100 % improvement).

Table 4 shows Bayer results from applying a UV curable coating via a carrier (e.g., FST process) compared with conventionally coating a lens with and without the extra heat of transferring applied.

Test #221-200-1 (Lenses A- D) are Bayer abrasion results from coating via an FST process.

Test #221-200-2(Lenses A-D) are abrasion results of conventionally coated lenses with the same stack exposed to the additional heat of transferring.

Test #221-200-3(Lenses A-D) are abrasion results of conventionally coated lens with the same stack and no additional heat of transferring.

**Table 4**

| | Bayer Abrasion ISTM 02002 | | | | | |
|---|---|---|---|---|---|---|
| Test # | Lens A | Lens B | Lens C | Lens D | Average | 95% |
| 221-200-1 | 4.84 | 4.76 | 5.1 | 4.42 | 4.78 | 0.27 |
| 221-200-2 | 2.46 | 2.57 | 2.53 | 2.39 | 2.48 | 0.08 |
| 221-200-3 | 2.22 | 2.2 | 2.21 | 2.25 | 2.22 | 0.02 |

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the present invention. All such changes and modifications are intended to be included within the scope of the invention as defined by the appended claims.

## Claims

1. A process for manufacturing a photochromic latex comprising the steps of (1) preparing a mixture comprising at least one organic monomer Z with a C=C group, at least one organic photochromic compound, at least one surfactant, and water;
(2) treating the mixture obtained in step (1) in order to form a miniemulsion consisting of an organic phase dispersed in the form of droplets having a diameter of 50 to 500 nm in an aqueous phase; (3) adding to the miniemulsion of a polymerization primer, if this latter was not introduced in step (1), or of a quantity of primer additional to that added in step (1); (4) polymerizing the reaction mixture obtained in step (3), and (5) recovering the photochromic latex, wherein the improvement comprises:
(6) introducing an additional latex component selected from the group consisting of a poly(meth)acrylic latex, a polyurethane latex, and a polyester latex, and combinations thereof, wherein the additional latex component reduces the haze and increases the abrasion resistance of the recovered photochromic latex.

2. The process of claim 1, wherein the additional latex component comprises a polyurethane latex.

3. The process of claim 2, wherein the polyurethane latex is 10% to 30% by weight related to the photochromic latex.

4. The process of claim 2, wherein the polyurethane latex is 20% by weight related to the photochromic latex.

5. The process of claim 2, wherein a particle size of the polyurethane latex is 20 nm to 200 nm.

6. The process of claim 1, wherein step (2) forms a miniemulsion consisting of an organic phase dispersed in the form of droplets having a diameter of 50 to 300 nm in an aqueous phase.

7. A latex composition made according to the process of claim 1.

8. A process for making a photochromic optical article wherein said process comprises a process of manufacturing a photochromic latex composition as obtained according to the process of claim 1, and wherein said process further comprises the steps of:
providing an optical article having a front convex surface and a back concave surface;
providing a flexible carrier having a concave surface and a convex surface, said concave surface of the carrier bearing at least one coating;
providing an apparatus comprising a deformable part and an inflatable membrane device, the deformable part and the inflatable membrane of the inflatable membrane device defining therebetween a receiving space;
positioning the carrier on the inflatable membrane, within the receiving space;
placing the optical article in front of the flexible carrier, with its convex surface facing the flexible carrier and its concave surface facing the deformable part;
inflating the membrane of the inflatable membrane device, so that the coated concave surface of the carrier matches the convex surface of the optical article;
deflating the membrane of the inflatable membrane device; and
recovering the optical article with its front convex surface coated with said at least one coating transferred from the flexible carrier,wherein said coating comprises said photochromic latex composition.

9. A photochromic optical article having a coating comprising a photochromic latex composition as described in claim 1.

10. The photochromic optical article as in claim 9, wherein a haze level of the coating is from 0.2 to 0.4.

11. The photochromic optical article of claim 9, wherein a haze level of the coating is 0.3.

12. The photochromic optical article of claim 9, wherein a haze level of the coating is independent from its thickness.

13. The photochromic optical article as in claim 9, wherein said optical article has an abrasion-resistance score, as measured by a Bayer test, which is greater than or equal to 3.0.

14. The photochromic optical article as in claim 9, wherein said optical article has an abrasion-resistance score, as measured by a Bayer test, which is greater than or equal to 4.0.

## Patentansprüche

1. Verfahren zur Herstellung eines photochromen Latex umfassend die Schritte von (1) Zubereitung einer Mischung umfassend zumindest ein organisches Monomer Z mit einer C=C Gruppe, zumindest einem organischen photochromen Verbindung, zumindest einem Netzmittel und Wasser;
(2) Behandlung der in Schritt (1) erhaltenen Mischung um eine Miniemulsion zu erhalten, die aus einer organischen Phase, welche in Form von Tröpfchen mit einem Durchmesser von 50 bis 500 nm in einer wässrigen Phase dispergiert ist, besteht; (3) Hinzufügen eines Polymerisationsprimers zu der Miniemulsion, wenn dieser nicht schon in Schritt (1) eingebracht wurde, oder einer Menge von Primer zusätzlich zu der hinzugefügten Menge in Schritt (1); (4) Polymerisation der in Schritt (3) erhaltenen Reaktionsmischung und (5) Gewinnung des photochromen Latex, wobei die Verbesserung umfasst:
(6) Einbringen eines zusätzlichen Latexbestandteiles ausgewählt aus der Gruppe bestehend aus einem Poly(meth)acrylatlatex, einem Polyurethanlatex und einem Polyesterlatex und deren Kombinationen, wobei der zusätzliche Latexbestandteil die Trübung reduziert und die Abriebfestigkeit des gewonnenen photochromen Latex erhöht.

2. Verfahren nach Anspruch 1, bei dem der zusätzliche Latexbestandteil einen Polyurethanlatex umfasst.

3. Verfahren nach Anspruch 2, bei dem der Polyurethanlatex 10 Gew.% bis 30 Gew.% im Bezug auf den photochromen Latex.

4. Verfahren nach Anspruch 2, bei dem der Polyurethanlatex 20 Gew.% im Bezug auf den photochromen Latex.

5. Verfahren nach Anspruch 2, bei dem die Partikelgröße des Polyurethanlatex 20 nm bis 200 nm ist.

6. Verfahren nach Anspruch 1, bei dem der Schritt (2) eine Miniemulsion bildet, die aus einer organischen Phase besteht, welche in der Form von Tröpfchen mit einem Durchmesser von 50 bis 300 nm in einer wässrigen Phase dispergiert ist.

7. Eine Latexzusammensetzung, welche nach dem Verfahren von Anspruch 1 hergestellt ist.

8. Verfahren zur Herstellung eines photochromen optischen Gegenstandes, wobei dieses Verfahren ein Verfahren zur Herstellung einer photochromen Latexzusammensetzung wie sie gemäß des Verfahrens in Anspruch 1 erhalten wird, umfasst und wobei dieses Verfahren weiterhin die Schritte umfasst von:
Bereitstellen eines optischen Gegenstands, welcher eine vordere konvexe Fläche und eine hintere konkave Fläche hat;
Bereitstellen eines flexiblen Trägers, welcher eine konkave Fläche und eine konvexe Fläche, wobei die konkave Fläche des Trägers zumindest eine Beschichtung trägt;
Bereitstellen einer Vorrichtung die einen verformbaren Part und eine aufblasbare Membraneinrichtung umfasst, wobei der verformbare Part und die aufblasbare Membran der aufblasbaren Membraneinrichung zwischen sich einen Aufnahmeraum definieren;
Positionieren des Trägers auf der aufblasbaren Membran innerhalb des Aufnahmeraums;
Anordnen des optischen Gegenstands vor dem flexiblen Träger, so dass seine konvexe Fläche zum flexiblen Träger weist und seine konkave Fläche zum verformbaren Part weist;
Aufblasen der Membran der aufblasbaren Membraneinrichtung, so dass die beschichtete konkave Fläche des Trägers mit der konvexen Fläche des optischen Gegenstands zusammen passt;
Entlüften der Membran der aufblasbaren Membraneinrichtung; und
Gewinnung des optischen Gegenstands mit seiner vorderen konvexen Fläche, welche mit der zumindest einen Beschichtung beschichtet ist, welche von dem flexiblen Träger übertragen wurde, wobei die Beschichtung die photochrome Latexzusammensetzung umfasst.

9. Photochromer optischer Gegenstand, der eine Beschichtung hat, welche eine photochrome Latexzusammensetzung wie beschrieben in Anspruch 1 umfasst.

10. Photochromer optischer Gegenstand des Anspruches 9, bei dem das Trübungs-Level der Beschichtung von 0,2 bis 0,4 reicht.

11. Photochromer optischer Gegenstand des Anspruches 9, bei dem das Trübungs-Level der Beschichtung 0,3 ist.

12. Photochromer optischer Gegenstand des Anspruches 9, bei dem das Trübungs-Level der Beschichtung unabhängig von ihrer Dicke ist.

13. Photochromer optischer Gegenstand wie in Anspruch 9, bei dem der optische Gegenstand einen Abriebsfestigkeitswert hat, wie durch einen Bayer-Test gemessen, der größer oder gleich 3,0 ist.

14. Photochromer optischer Gegenstand wie in Anspruch 9, bei dem der optische Gegenstand einen Abriebsfestigkeitswert hat, wie durch einen Bayer-Test gemessen, der größer oder gleich 4,0 ist.

## Revendications

1. Procédé pour la production d'un latex photochromique, comprenant les étapes de : (1) préparer un mélange comprenant au moins un monomère organique Z avec un groupe C=C, au moins un composé photochromique organique, au moins un agent tensioactif et de l'eau ;
(2) traiter le mélange obtenu dans l'étape (1) afin de former une mini-émulsion consistant en une phase organique dispersée sous forme de gouttelettes ayant un diamètre de 50 à 500 nm dans une phase aqueuse; (3) ajouter à la mini-émulsion un activateur de polymérisation, si ce dernier n'a pas été introduit dans l'étape (1), ou une quantité d'un activateur en plus de celle ajoutée dans l'étape (1) ; (4) polymériser le mélange réactionnel obtenu dans l'étape (3), et (5) recueillir le latex photochromique, dans lequel le perfectionnement comprend :
(6) l'introduction d'un constituant de latex supplémentaire choisi dans le groupe consistant en un latex poly(méth)acrylique, un latex de polyuréthanne et un latex de polyester, ainsi que leurs associations, ledit constituant de latex supplémentaire réduisant le trouble et augmentant la résistance à l'abrasion du latex photochromique recueilli.

2. Procédé selon la revendication 1, dans lequel le constituant de latex supplémentaire comprend un latex de polyuréthanne.

3. Procédé selon la revendication 2, dans lequel le latex de polyuréthanne est présent en une quantité de 10 % à 30 % en poids par rapport au latex photochromique.

4. Procédé selon la revendication 2, dans lequel le latex de polyuréthanne est présent en une quantité de 20 % en poids par rapport au latex photochromique.

5. Procédé selon la revendication 2, dans lequel le diamètre de particule du latex de polyuréthanne est de 20 nm à 200 nm.

6. Procédé selon la revendication 1, dans lequel l'étape (2) forme une mini-émulsion consistant en une phase organique dispersée sous forme de gouttelettes ayant un diamètre de 50 à 300 nm dans une phase aqueuse.

7. Composition de latex préparée selon le procédé de la revendication 1.

8. Procédé pour la préparation d'un article optique photochromique, ledit procédé comprenant un procédé de production d'une composition de latex photochromique telle qu'obtenue selon le procédé de la revendication 1, et ledit procédé comprenant en outre les étapes de :
fournir un article optique ayant une surface frontale convexe et une surface postérieure concave ;
fournir un support flexible ayant une surface concave et une surface convexe, ladite surface concave de support portant au moins un revêtement ;
fournir un appareil comprenant une partie déformable et un dispositif à membrane gonflable, la partie déformable et la membrane gonflable du dispositif à membrane gonflable définissant entre elles un espace de réception ;
positionner le support sur la membrane gonflable, à l'intérieur de l'espace de réception ;
placer l'article optique en face du support flexible, sa surface convexe faisant face au support flexible et sa surface concave faisant face à la partie déformable ;
gonfler la membrane du dispositif à membrane gonflable, de telle sorte que la surface concave revêtue du support concorde avec la surface convexe de l'article optique ;
dégonfler la membrane du dispositif à membrane gonflable ; et
recueillir l'article optique avec sa surface frontale convexe revêtue dudit au moins un revêtement transféré depuis le support flexible, ledit revêtement comprenant ladite composition de latex photochromique.

9. Article optique photochromique comportant un revêtement comprenant une composition de latex photochromique telle que décrite dans la revendication 1.

10. Article optique photochromique selon la revendication 9, ayant un degré de trouble du revêtement de 0,2 à 0,4.

11. Article optique photochromique selon la revendication 9, dans lequel le degré de trouble du revêtement est égal à 0,3.

12. Article optique photochromique selon la revendication 9, dans lequel le degré de trouble du revêtement est indépendant de son épaisseur.

13. Article optique photochromique selon la revendication 9, ledit article optique ayant une valeur numérique de résistance à l'abrasion, telle que mesurée par un test Bayer, qui est supérieure ou égale à 3,0.

14. Article optique photochromique selon la revendication 9, ledit article optique ayant une valeur numérique de résistance à l'abrasion, telle que mesurée par un test Bayer, qui est supérieure ou égale à 4,0.
